Europäisches Patentamt

European Patent Office

Office européen des brevets

(11) Numéro de publication : **0 194 937**
**B1**

(12) **FASCICULE DE BREVET EUROPÉEN**

(45) Date de publication du fascicule du brevet :
**28.09.88**

(21) Numéro de dépôt : **86400491.6**

(22) Date de dépôt : **07.03.86**

(51) Int. Cl.⁴ : **G 01 L   7/08**

(54) **Capteur de pression à piston.**

(30) Priorité : **12.03.85 FR 8503627**

(43) Date de publication de la demande :
**17.09.86 Bulletin 86/38**

(45) Mention de la délivrance du brevet :
**28.09.88 Bulletin 88/39**

(84) Etats contractants désignés :
**BE CH DE GB LI**

(56) Documents cités :
**US-A- 3 136 130**

(73) Titulaire : **SEDEME**
**11, rue Simonet**
**F-75013 Paris (FR)**

(72) Inventeur : **Marcaillou, François**
**THOMSON-CSF SCPI 19, avenue de Messine**
**F-75008 Paris (FR)**

(74) Mandataire : **Grynwald, Albert et al**
**THOMSON-CSF SCPI 19, avenue de Messine**
**F-75008 Paris (FR)**

## Description

L'invention est relative à un capteur de pression (ou manomètre) notamment à jauge de contrainte.

Elle concerne plus particulièrement un capteur de ce type qui comporte un piston avec une face exposée à la pression à mesurer et l'autre face soumise à une pression de référence. L'effort qu'exerce la pression à mesurer sur le piston est transmis à un dynamomètre par exemple à jauge de contrainte qui délivre un signal électrique représentant la pression à mesurer.

Le piston sépare une chambre cylindrique en deux parties. Pour que la séparation soit parfaitement étanche la périphérie de ce piston est reliée à la surface interne de la chambre cylindrique par l'intermédiaire d'une membrane élastique annulaire dont le bord interne est donc fixé à la périphérie du piston et dont le bord externe est encastré dans le cylindre.

Le signal électrique fourni par la jauge de contrainte (ou un moyen équivalent) est fonction du déplacement, de faible amplitude (par exemple de 50 à 200 microns), du piston. Si ce dernier coulissait sans frottement dans la chambre cylindrique on pourrait rendre le déplacement proportionnel à la pression, le coefficient de proportionnalité étant la raideur d'un ressort faisant partie du dynamomètre à jauge de contrainte. Mais il n'en est pas ainsi car la pression doit non seulement assurer le déplacement du piston mais également celui de la membrane et cette dernière constitue un ressort de raideur variable avec la position du piston. De plus la portion de la superficie de la membrane qui s'ajoute à la superficie du piston pour déterminer l'effort qu'exerce la pression varie aussi avec la position du piston, c'est-à-dire avec la pression. De ce fait le déplacement du piston n'est pas une fonction linéaire de la pression à mesurer et le signal électrique fourni par le capteur ne varie, en principe, pas de façon linéaire avec la pression. Cette caractéristique constitue un inconvénient pour certaines applications.

L'invention remédie à cet inconvénient.

Elle est caractérisée en ce qu'une zone circulaire, de même axe que la chambre, de la membrane est solidaire d'un moyen de ressort de raideur telle que, sous l'effet de la pression à mesurer, cette zone se déplace en direction axiale pratiquement de la même longueur que le piston. On réduit ainsi dans une grande mesure la part de non linéarité intervenant dans la relation entre la pression à mesurer et le déplacement du piston. En effet, le moyen de ressort prévu par l'invention annule pratiquement l'effet, néfaste pour la linéarité, de la partie de la membrane se trouvant entre le piston et la zone circulaire à laquelle est rattaché ce moyen de ressort. Autrement dit, pour améliorer la linéarité de la relation entre le signal de force (proportionnel au déplacement du piston) mesurée par le dynamomètre et la pression à mesurer, on augmente la part de raideur qui ne varie pas avec le déplacement du piston et on diminue la part de la superficie de la membrane qui varie avec cette pression.

En pratique on choisit la raideur du moyen de ressort solidaire de la zone circulaire de la membrane de valeur telle que le déplacement de cette zone, lorsque la pression à mesurer passe de la valeur de référence (pression relative nulle) à la valeur maximale, soit exactement égal au, ou très voisin du, déplacement du piston pour la même variation de pression.

Dans une réalisation le moyen de ressort comporte une cloche cylindrique coaxiale au piston et à la chambre cylindrique et dont le plafond, rattaché au plafond de la chambre, est élastiquement déformable, cette cloche étant de préférence disposée du côté de la membrane qui est soumise à la pression de référence.

D'autres caractéristiques et avantages de l'invention apparaîtront avec la description de certains de ses modes de réalisation, celle-ci étant effectuée en se référant aux dessins ci-annexés sur lesquels :

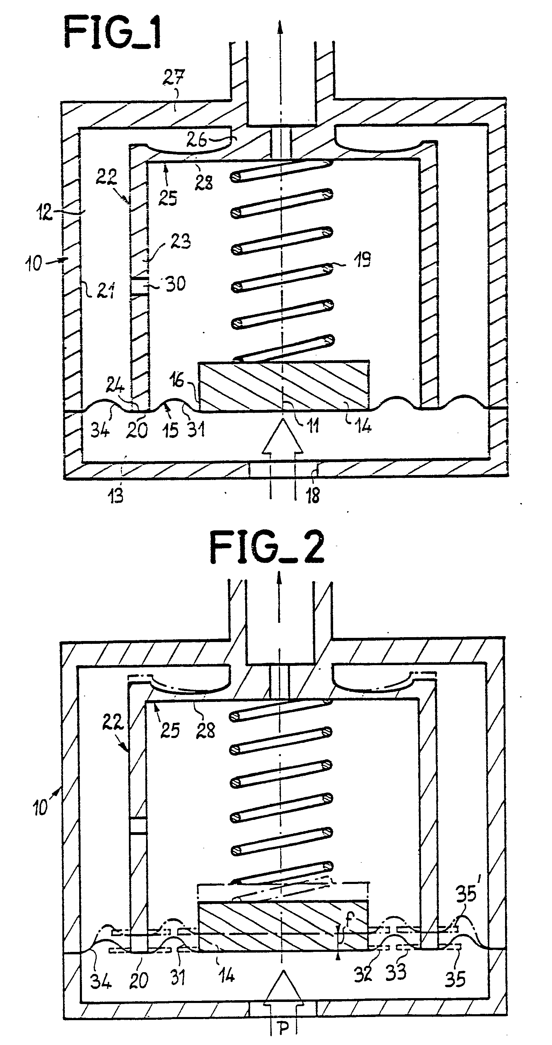

la figure 1 est un schéma d'un capteur de pression conforme à l'invention, et

la figure 2 est un schéma analogue à celui de la figure 1 illustrant le fonctionnement du capteur.

Ce capteur de pression comporte une chambre cylindrique 10 par exemple de section circulaire d'axe 11. Elle est séparée de manière étanche en deux enceintes 12 et 13 par un piston 14 en forme de disque d'axe 11 et par une membrane annulaire 15 raccordée de manière étanche à la périphérie 16 du piston 14 et raccordée, également de façon étanche, à la paroi de la chambre cylindrique 10.

Dans l'enceinte 12 règne une pression de référence, par exemple la pression atmosphérique. En variante cette enceinte 12 est vide. L'enceinte 13 est soumise à la pression à mesurer, le fluide présentant cette pression pénétrant par une ouverture 18.

Dans l'enceinte 12 se trouve un dynamomètre 19 à propriété de ressort et, pour cette raison, symbolisé ici par un ressort en spirale. De ce dynamomètre est solidaire une (ou plusieurs) jauge(s) de contrainte (non représentée) délivrant un signal électrique, tel qu'une tension $V_s$, proportionnel au déplacement du piston 14. Dans l'exemple la jauge de contrainte est constituée par une barre coincée entre le piston 14 et une paroi de la chambre cylindrique et sur laquelle son disposées des résistances électriques dont la valeur varie avec la contrainte exercée sur la barre, c'est-à-dire avec la pression. Ainsi le déplacement du piston 14 est de faible valeur, de l'ordre de 50 à 200 microns.

Selon l'invention une zone circulaire 20 de la membrane 15, entre la périphérie 16 du piston 14 et la face interne 21 de la chambre 10, est solidaire de la tranche d'extrémité 24 d'une cloche cylindrique 22 d'axe 11 à propriété de ressort en direction axiale. Cette cloche 22 présente une paroi cylindrique 23 d'axe 11, se terminant par la tranche 24 contre laquelle est collée ou soudée la zone 20 de la membrane 15, ainsi qu'un plafond 25 rattaché, par une zone cylindrique 26, au plafond 27 de la chambre 10. Ce plafond 25 de la cloche 22 présente une zone amincie 28 lui conférant la propriété de ressort en direction axiale. En variante à la place d'une zone amincie 28 on prévoit une membrane élastique analogue à la membrane 15 reliant le cylindre 26 à la paroi 23.

Le cylindre 26 de raccordement du plafond 25 au plafond 27 de la chambre 10 présente, comme ce dernier plafond 27, une ouverture permettant, d'une part, le passage d'un conducteur électrique (non représenté) assurant la liaison de la jauge (ou des jauges) de contrainte avec un circuit de mesure et, d'autre part, la mise en communication avec l'atmosphère de ladite enceinte 12. La paroi 23 de la cloche 22 présente au moins une ouverture 30 de communication avec le reste de l'enceinte 12 afin que l'ensemble de cette enceinte 12 soit soumis à la pression de référence.

On va maintenant décrire en relation avec la figure 2 le fonctionnement du capteur de pression conforme à l'invention. Sur cette figure la position représentée en trait plein correspond à une pression à mesurer nulle en valeur relative, c'est-à-dire égale à la pression de référence, et la position en trait mixte correspond à une pression de mesure de valeur maximum. Entre ces deux états le piston 14 est déplacé d'une distance f et, de même, la zone 20 est déplacée d'une distance égale. Ce résultat est obtenu grâce au choix de la raideur du ressort que constitue la cloche 22 avec sa zone amincie 28 ou sa membrane.

En raison de ces déplacements de même longueur du piston 14 et de la zone 20, la partie 31 de la membrane 15, se trouvant entre la périphérie 16 du piston 14 et la zone 20, ne change pas de forme. Dans ces conditions elle ne joue pas le rôle d'un ressort et la surface qu'elle offre à la pression à mesurer ne varie pas de superficie. Ainsi cette partie 31 de la membrane 15 peut être assimilée, d'une part, à une augmentation de superficie offerte par le piston 14 à la pression P, cette augmentation de superficie étant équivalente à un anneau 32 autour du piston 14, et, d'autre part, à une augmentation de superficie vers l'intérieur de la tranche 24 de la cloche 22, cette augmentation étant aussi symbolisée par un anneau 33 en traits interrompus. Les superficies de ces anneaux 32 et 33 ne changent pas lorsque le piston se déplace.

Par contre la partie 34 de la membrane 15 extérieure à la cloche 22 se comporte comme un ressort de raideur et de superficie variables. Elle peut être assimilée à un anneau augmentant la superficie de la tranche 24 à l'extérieur de la cloche 22 mais de superficie dont la valeur varie avec la pression. C'est pourquoi l'anneau 35 correspond à une pression relative nulle est de superficie supérieure à celle de l'anneau 35' correspondant pour la pression maximale.

Si l'on ne tient pas compte de la partie 34 de la membrane 15 le signal électrique délivré par le dynamomètre 19 est proportionnel à la pression, ce qui correspond au but recherché. Mais la partie 34 de membrane 15 introduit une part de non linéarité, ce qui signifie que le signal délivré par le dynamomètre 19 n'est pas strictement proportionnel à la pression. Toutefois l'effet de ladite partie 34 de membrane est relativement faible, c'est-à-dire qu'en première approximation on peut considérer que le signal de sortie varie de façon linéaire avec la pression. Il est d'ailleurs à noter qu'on se rapproche d'autant mieux de la proportionnalité que la raideur du ressort constitué par la cloche cylindrique 22 est d'autant plus grande par rapport à la raideur de la partie 34 de membrane 15.

Lorsque la pression à mesurer a la valeur maximale, la zone 20 s'est déplacée d'une longueur exactement égale à celle du déplacement du piston 14. Cependant pour une valeur intermédiaire de la pression les déplacements de la zone 20 et du piston 14 ne sont pas strictement égaux. Il en résulte que la partie 31 de la membrane 15 fonctionne comme un ressort de raideur variable et sa superficie varie. Mais cette intervention de la partie 31 de la membrane 15 n'intervient que pour une très faible part et peut être entièrement négligée.

Ainsi avec la cloche 22 constituant un moyen de ressort en direction axiale avec une raideur telle qu'un anneau 20 de la membrane se déplace comme le piston 14, on a remplacé (au moins en grande partie) une partie 31 de la membrane 15 qui, dans l'état antérieur de la technique présentait une superficie et une raideur variables conférant une forte non linéarité à la relation pression-signal de sortie, par un ressort améliorant notablement la linéarité de ladite relation pression-signal de sortie.

Dans un exemple la chambre 10, la cloche 22, le piston 14 et les membranes 15 et 28 sont en acier inoxydable. En variante les membranes sont en un alliage de bronze et de béryllium.

Bien que dans l'exemple décrit la jauge de contrainte 19 soit du type à éléments résistifs, il va de soi que l'invention n'est pas limitée à cet exemple. Ainsi dans une variante on utilise, à la place des éléments résistifs, des éléments capacitifs.

Dans l'exemple le capteur permet de mesurer des pressions comprises entre 100 millibars et 50 ou 100 bars.

## Revendications

1. Capteur de pression comprenant une chambre cylindrique (10) séparée de façon étanche en deux parties (12, 13) par un piston (14) et une membrane annulaire (15), l'une de ces parties (13) étant exposée à la pression à mesurer et l'autre partie (12) à une pression de référence, la pression étant mesurée par un moyen (19), tel qu'une jauge de contrainte, délivrant un signal électrique fonction du, notamment proportionnel au, déplacement (f) du piston, caractérisé en ce que, pour améliorer la linéarité de la relation entre la pression et le déplacement (f) du piston, une zone circulaire (20), coaxiale au piston (14), de la membrane (15) est solidaire d'un moyen de ressort (22, 28) de raideur telle que, sous l'effet de la pression à mesurer, ladite zone (20) de la membrane se déplace en direction axiale pratiquement d'une même longueur que le piston (14).

2. Capteur selon la revendication 1, caractérisé en ce que le moyen de ressort (22, 28) est disposé dans la partie (12) de la chambre cylindrique qui est soumise à la pression de référence.

3. Capteur selon la revendication 2, caractérisé en ce que le moyen de ressort comporte une cloche cylindrique (22) coaxiale à la chambre cylindrique (10) dont la tranche d'extrémité (24) est fixée à ladite zone circulaire (20) de la membrane (15).

4. Capteur selon la revendication 3, caractérisé en ce que le plafond (25) de la cloche (22) est rattaché au plafond (27) de la chambre cylindrique et est élastiquement déformable de façon à conférer des propriétés de ressort en direction axiale à cette cloche.

5. Capteur selon la revendication 4, caractérisé en ce que le plafond (25) de la cloche comporte une membrane (28).

6. Capteur selon la revendication 4, caractérisé en ce que le plafond de la cloche présente un amincissement.

7. Capteur selon l'une quelconque des revendications 3 à 6, caractérisé en ce que la cloche présente au moins une ouverture (30) pour mettre en communication l'intérieur de cette cloche avec le reste de l'enceinte (12) soumise à la pression de référence.

8. Capteur selon l'une quelconque des revendications précédentes, caractérisé en ce que la raideur du moyen de ressort (22) solidaire de la zone (20) de la membrane est telle que lorsque la pression à mesurer passe d'une valeur égale à la pression de référence à sa valeur maximale la zone circulaire (20) de la membrane (15) se déplace en direction axiale d'exactement la même longueur que le piston (14), ou d'une longueur très voisine.

## Claims

1. A pressure sensor comprising a cylindrical chamber (10) separated in a sealing manner into two parts (12 and 13) by a piston (14) and an annular membrane (15), one of these parts (13) being exposed to the pressure to be measured and the other part (12) being exposed to a reference pressure, the pressure being measured with the aid of a means (19) such as a strain gage, delivering an electrical signal which is a function of, and more especially proportional to, the displacement (f) of the piston, characterized in that in order to improve the linearity of the relationship between the pressure and the displacement (f) of the piston, a circular zone (20), coaxial to the piston (14), of the membrane (15) is integral with a spring means (22 and 28) of such a stiffness that, under the effect of the pressure to be measured, the said zone (20) of the membrane moves in an axial direction along practically the same length as the piston (14).

2. The sensor as claimed in claim 1, characterized in that the spring means (22 and 28) is disposed in the part (12) of the cylindrical chamber which is subjected to the reference pressure.

3. The sensor as claimed in claim 2, characterized in that the spring means comprises a cylindrical bell (22) coaxial to the cylindrical chamber (10) whose end section (24) is fixed to the said circular zone (20) of the membrane (15).

4. The sensor as claimed in claim 3, characterized in that the top wall (25) of the bell (22) is connected to the top wall (27) of the cylindrical chamber and is elastically deformable in such a manner as to provide spring properties in the axial direction to this bell.

5. The sensor as claimed in claim 4, characterized in that the top wall (25) of the bell comprises a membrane (28).

6. The sensor as claimed in claim 4, characterized in that the top wall of the bell has a thinner zone.

7. The sensor as claimed in any one of the claims 3 through 6, characterized in that the bell has at least one opening (30) to provide a communication between the interior of this bell with the rest of the enclosure (12) subjected to the reference pressure.

8. The sensor as claimed in any one of the preceding claims, characterized in that the stiffness of the spring means (22) integral with the zone (20) of the membrane is such that when the pressure to be measured exceeds a value equal to the reference pressure at its maximum value the circular zone (20) of the membrane (15) moves in an axial direction exactly along the same length as the piston (14) or a length very close to this.

## Patentansprüche

1. Druckaufnehmer mit einer zylindrischen Kammer (10), die durch einen Kolben (14) und eine ringförmige Membran (15) in zwei Teile (12, 13) hermetisch getrennt ist, wobei einer dieser Teile (13) dem zu messenden Druck und der andere Teil (12) einem Referenzdruck ausgesetzt sind, wobei der Druck von einer Einrichtung (19) gemessen wird, wie z. B. einem Beanspruchungsmesser, die ein elektrisches Signal abgibt, welches von der Kolbenverschiebung (f) abhängig ist, und insbesondere zu dieser proportional ist, dadurch gekennzeichnet, daß, um die Linearität des Verhältnisses zwischen dem Druck und der Kolbenverschiebung (f) zu verbessern, eine zu dem Kolben (14) koaxiale, kreisförmige Zone (20) der Membran (15) mit einem Federmittel (22, 28) fest verbunden ist, dessen Steifigkeit derart ist, daß unter der Wirkung des zu messenden Drucks die genannte Zone der Membran sich in axialer Richtung um praktisch eine gleiche Länge wie der Kolben (14) verschiebt.

2. Aufnehmer nach Anspruch 1, dadurch gekennzeichnet, daß das Federmittel (22, 28) in demjenigen Teil (12) der zylindrischen Kammer angebracht ist, der dem Referenzdruck unterworfen ist.

3. Aufnehmer nach Anspruch 2, dadurch gekennzeichnet, daß das Federmittel eine zylindrische Glocke (22) umfaßt, die zu der zylindrischen Kammer (10) koaxial steht, deren Endabschnitt (24) auf der genannten kreisförmigen Zone (20) der Membran (15) befestigt ist.

4. Aufnehmer nach Anspruch 3, dadurch gekennzeichnet, daß das Oberteil (25) der zylindrischen Glocke (22) an das Oberteil (27) der zylindrischen Kammer angeschlossen und derart elastisch verformbar ist, daß sie dieser Glocke in axialer Richtung Federeigenschaften verleiht.

5. Aufnehmer nach Anspruch 4, dadurch gekennzeichnet, daß das Oberteil· (25) der Glocke eine Membran (28) umfaßt.

6. Aufnehmer nach Anspruch 4, dadurch gekennzeichnet, daß das Oberteil der Glocke eine Verdünnung aufweist.

7. Aufnehmer nach einem der Ansprüche 3 bis 6, dadurch gekennzeichnet, daß die Glocke wenigstens eine Öffnung (30) aufweist, um das Innere dieser Glocke mit dem Rest des Gehäuses (12), das dem Referenzdruck unterworfen ist, in Verbindung zu setzen.

8. Aufnehmer nach einem der vorstehenden Ansprüche, dadurch gekennzeichnet, daß die Steifigkeit des mit der Zone (20) der Membran fest verbundenen Federmittels (22) derart ist, daß, wenn der zu messende Druck von einem Wert, der gleich dem Referenzdruck ist, auf seinem Maximalwert übergeht, die kreisförmige Zone (20) der Membran in axialer Richtung um genau oder ziemlich genau die gleiche Länge wie der Kolben (14) verschoben wird.

0 194 937

# FIG_1

# FIG_2